# EUROPÄISCHE PATENTSCHRIFT

(11) **EP 3 815 489 B1**
(45) Veröffentlichungstag und Bekanntmachung des Hinweises auf die Patenterteilung: **11.09.2024**
(21) Anmeldenummer: 20401054.0
(22) Anmeldetag: 19.10.2020
(51) Int. Cl.: G05B 19/042, A01B 79/00

(54) **VERFAHREN ZUM UNTERSTÜTZEN EINES MASCHINENBEDIENERS BEI DEM BETRIEB EINER LANDWIRTSCHAFTLICHEN MASCHINE**
METHOD FOR SUPPORTING A MACHINE OPERATOR DURING OPERATION OF AN AGRICULTURAL MACHINE
PROCÉDÉ D'AIDE À LA CONDUITE DE MACHINE LORS DU FONCTIONNEMENT D'UNE MACHINE AGRICOLE

(30) Priorität: 30.10.2019 DE 102019129240
(43) Veröffentlichungstag der Anmeldung: 05.05.2021
(73) Patentinhaber: Amazonen-Werke H. Dreyer SE & Co. KG, 49205 Hasbergen (DE)
(72) Erfinder: Kühn, Christoph, 49186 Bad Iburg (DE); Große Brinkhaus, Andre, 48149 Münster (DE); Bardroff, Alexander, 26127 Oldenburg (DE); Konermann, Thomas, 49479 Ibbenbüren (DE); Heer, Jochen, 49074 Osnabrück (DE)

(56) Entgegenhaltungen:
- EP-A1- 2 821 864
- EP-A2- 2 798 930
- DE-A1- 102015 111 911
- US-A1- 2015 052 447
- US-A1- 2017 066 365
- US-A1- 2019 246 557

## Beschreibung

Die Erfindung betrifft ein Verfahren zum Unterstützen eines Maschinenbedieners bei dem Betrieb einer landwirtschaftlichen Maschine nach dem Oberbegriff des Patentanspruchs 1 und ein Kommunikationssystem nach dem Oberbegriff des Patentanspruchs 7.

Landwirtschaftliche Maschinen, wie beispielsweise Sämaschinen, Feldspritzen oder Düngerstreuer, werden mit einer zunehmenden Anzahl von Sensorsystemen ausgestattet, wobei gleichzeitig die Steuerungs- und Konfigurationsmöglichkeiten an entsprechenden Maschinen ständig erweitert werden. Dies führt zu einer zunehmenden Bedienkomplexität der landwirtschaftlichen Maschinen und erfordert bei den Maschinenbedienern umfassende Maschinenkenntnisse und ein gewisses Maß an Erfahrung beim Betrieb solcher Maschinen.

Die aktuellen Konfigurations- und/oder Betriebsparameter einer landwirtschaftlichen Maschine werden durch ein Anzeige- und Bedienterminal über ein Bussystem abgerufen, mit welchem das Anzeige- und Bedienterminal und die landwirtschaftliche Maschine signalübertragend verbunden sind. Nach dem Abruf werden die Konfigurations- und/oder Betriebsparameter dann durch das Anzeige- und Bedienterminal dem Maschinenbediener angezeigt. Das Display der in der Praxis eingesetzten Anzeige- und Bedienterminals ist jedoch regelmäßig nicht dazu geeignet, dem Maschinenbediener zusätzlich maschinenspezifische Informationen anzuzeigen, welche den Maschinenbediener bei dem Betrieb der landwirtschaftlichen Maschine unterstützen. Beispiele dieser Art lassen sich in der DE 10 2015 111 911 A1, der EP 2 798 930 A2, der US 2015 052 447 A1, der US 2017 066 365 A1, der US 2019 246 557 A1 sowie der EP 2 821 864 A1 finden. Insbesondere unerfahrene Maschinenbediener sind häufig mit der korrekten Einstellung und Konfiguration der landwirtschaftlichen Maschine überfordert. In solchen Situationen haben die Maschinenbediener bisher keine Möglichkeit sich maschinenspezifische Einstell- und/oder Konfigurationshinweise anzeigen zu lassen. In der Praxis ist in diesen Fällen häufig ein erfahrener Maschinenbediener telefonisch zu kontaktieren, damit die korrekte Einstellung und Konfiguration der landwirtschaftlichen Maschine umgesetzt werden kann.

Die der Erfindung zugrundeliegende Aufgabe besteht somit darin, die Unterstützung eines Maschinenbedieners bei dem Betrieb einer landwirtschaftlichen Maschine zu verbessern. Die Aufgabe wird gelöst durch ein Verfahren der eingangs genannten Art, wobei im Rahmen des erfindungsgemäßen Verfahrens ein mobiles Endgerät mit dem Bussystem verbunden wird. Im Anschluss daran wird ein Anzeigebefehl, welcher das Anzeigen von ergänzenden maschinenspezifischen Informationen zu der landwirtschaftlichen Maschine betrifft, an das mobile Endgerät über das Bussystem gesendet. Die ergänzenden maschinenspezifischen Informationen zu der landwirtschaftlichen Maschine werden dann durch das mobile Endgerät angezeigt.

Die Erfindung macht sich die Erkenntnis zunutze, dass durch die Kopplung eines mobilen Endgeräts die Möglichkeit der Informationswiedergabe erheblich verbessert wird, da eine erweiterte Anzeigemöglichkeit für Konfigurations- und/oder Betriebsparameter sowie ergänzende maschinenspezifische Informationen geschaffen wird. Der Betrieb der landwirtschaftlichen Maschine wird über das Anzeigen der ergänzenden maschinenspezifischen Informationen durch das mobile Endgerät erheblich vereinfacht. Der Maschinenbediener benötigt folglich weniger umfangreiche Maschinenkenntnisse, um die landwirtschaftliche Maschine bedienen zu können. Außerdem kommt es zu einer erheblichen Steigerung des Komforts bei der Maschinenbedienung.

Die ergänzenden maschinenspezifischen Informationen sind erfindungsgemäß maschinenspezifische Einstell- und/oder Konfigurationshinweise. Der Einstell- und/oder Konfigurationsvorgang an der landwirtschaftlichen Maschine wird durch die angezeigten ergänzenden maschinenspezifischen Informationen auf diese Weise erheblich vereinfacht. Ferner hat der Maschinenbediener die Möglichkeit, das mobile Endgerät beim Einstellen und/oder Konfigurieren der landwirtschaftlichen Maschine mit sich zu führen.

Die ergänzenden maschinenspezifischen Informationen können nicht erfindungsgemäß aktuelle Informationen über Maschinenzustände sein. Die Darstellung der Informationen kann auf einem mobilen Endgerät in übersichtlicherer und/oder detaillierterer Weise erfolgen.

Die landwirtschaftliche Maschine wird vorzugsweise von einem Fahrzeug getragen oder gezogen, welches das Bussystem bereitstellt. Das Fahrzeug kann beispielsweise ein Traktor sein. Das Anzeige- und Bedienterminal ist vorzugsweise drahtlos oder kabelgebunden mit dem Bussystem verbunden. Das Bussystem ist vorzugsweise ein CAN-BUS- oder ein ISOBUS-System. Das Anzeige- und Bedienterminal ist vorzugsweise ein ISOBUS-Terminal.

Das Anzeigen der ergänzenden maschinenspezifischen Informationen kann mittels eines Displays des mobilen Endgeräts erfolgen. Ferner können die ergänzenden maschinenspezifischen Informationen auch akustisch mittels eines Lautsprechers des mobilen Endgeräts wiedergegeben werden. Über das Anzeigen der ergänzenden maschinenspezifischen Informationen wird dem Maschinenbediener erfindungsgemäß eine kontextbezogene Hilfe bereitgestellt. Die ergänzenden maschinenspezifischen Informationen werden in Form von Audiosequenzen, Videosequenzen, Bildern und/oder Texten wiedergegeben. Die Videosequenzen können dabei beispielsweise ein Video-Tutorial betreffen. Die ergänzenden maschinenspezifischen Informationen können auch eine interaktive Bedienungsanleitung betreffen. Das Anzeigen der ergänzenden maschinenspezifischen Informationen erfolgt vorzugsweise über eine auf dem mobilen Endgerät installierte Anwendung.

In einer bevorzugten Ausführungsform des erfindungsgemäßen Verfahrens werden die aktuellen Konfigurations- und/oder Betriebsparameter durch das mobile Endgerät über das Bussystem von der landwirtschaftlichen Maschine abgerufen. Alternativ oder zusätzlich werden die abgerufenen Konfigurations- und/oder Betriebsparameter durch das mobile Endgerät angezeigt. Die durch das Anzeige- und Bedienterminal anzeigbaren Konfigurations- und/oder Betriebsparameter können von dem mobilen Endgerät alternativ oder zusätzlich zu den ergänzenden maschinenspezifischen Informationen angezeigt werden. Das mobile Endgerät dient in diesem Fall also als Anzeigeerweiterung des Anzeige- und Bedienterminals.

Es ist darüber hinaus ein erfindungsgemäßes Verfahren vorteilhaft, bei welchem beim Verbinden des mobilen Endgeräts mit dem Bussystem eine drahtlose Kommunikationsverbindung zwischen dem mobilen Endgerät und dem Bussystem hergestellt wird. Die drahtlose Kommunikationsverbindung zwischen dem mobilen Endgerät und dem Bussystem ist vorzugsweise eine Direktverbindung zwischen dem mobilen Endgerät und dem Bussystem, beispielsweise eine Bluetooth-Verbindung. Alternativ kann die drahtlose Kommunikationsverbindung zwischen dem mobilen Endgerät und dem Bussystem auch eine WLAN-Verbindung und/oder eine Verbindung über das Mobilfunknetz und/oder das Internet sein.

In einer anderen Ausführungsform des erfindungsgemäßen Verfahrens erfolgt das Verbinden des mobilen Endgeräts mit dem Bussystem und/oder das Senden des Anzeigebefehls an das mobile Endgerät über einen Busadapter. Der Busadapter ist vorzugsweise mit dem Bussystem verbunden. Über den Busadapter sind vorzugsweise Busnachrichten drahtlos an das mobile Endgerät versendbar. Vorzugsweise erfolgt das Abrufen der aktuellen Konfigurations- und/oder Betriebsparameter von der landwirtschaftlichen Maschine durch das mobile Endgerät ebenfalls über den Busadapter.

Die Busnachrichten werden durch den Busadapter vorzugsweise vor dem Versenden an das mobile Endgerät modifiziert. Eine Modifikation kann beispielsweise eine Komprimierung der zu übertragenden Daten sein. Auf diese Weise ist eine schonende Nutzung der zur Übertragung verfügbaren Bandbreite möglich. Der Busadapter ist vorzugsweise ein CAN-to-Bluetooth-Adapter. Es ist keine externe Hardware an der landwirtschaftlichen Maschine erforderlich, um die Datenübertragung mit dem mobilen Endgerät zu realisieren. Durch die Kombination aus dem Busadapter und dem mobilen Endgerät wird teure Zusatzhardware zur Umsetzung eines Kommunikationssystems überflüssig.

In einer Weiterbildung des erfindungsgemäßen Verfahrens sind die von dem mobilen Endgerät angezeigten ergänzenden maschinenspezifischen Informationen auf dem mobilen Endgerät gespeichert. Wenn die ergänzenden maschinenspezifischen Informationen auf dem mobilen Endgerät gespeichert sind, werden diese vorzugsweise bei der Installation der Anwendung auf dem mobilen Endgerät auf einem Speicher des mobilen Endgeräts hinterlegt. Alternativ können die von dem mobilen Endgerät angezeigten ergänzenden maschinenspezifischen Informationen durch das mobile Endgerät von einer externen Datenbank abgerufen werden. Wenn die ergänzenden maschinenspezifischen Informationen durch das mobile Endgerät von einer externen Datenbank abgerufen werden, erfolgt der Datenabruf von der externen Datenbank vorzugsweise über das Mobilfunknetz und/oder das Internet. Die externe Datenbank ist vorzugsweise kein Bestandteil des mobilen Endgeräts, der landwirtschaftlichen Maschine oder eines die landwirtschaftliche Maschine tragenden oder ziehenden Fahrzeugs.

Im erfindungsgemäßen Verfahren ist das Senden des Anzeigebefehls an das mobile Endgerät und/oder das Anzeigen der ergänzenden maschinenspezifischen Informationen zu der landwirtschaftlichen Maschine durch das mobile Endgerät durch eine Benutzereingabe auf dem Anzeige- und Bedienterminal veranlassbar. Das Anzeige- und Bedienterminal stellt zum Veranlassen des Sendens des Anzeigebefehls an das mobile Endgerät und/oder des Anzeigens der ergänzenden maschinenspezifischen Informationen zu der landwirtschaftlichen Maschine vorzugsweise eine Schaltfläche oder ein Bedienelement bereit. Die Schaltfläche oder das Bedienelement können beispielsweise mit einer Kennzeichnung, wie etwa einem Fragezeichen, versehen sein. Vorzugsweise ist das Abrufen der aktuellen Konfigurations- und/oder Betriebsparameter von der landwirtschaftlichen Maschine durch das mobile Endgerät und/oder das Anzeigen der abgerufenen Konfigurations- und/oder Betriebsparameter durch das mobile Endgerät ebenfalls durch eine Benutzereingabe auf dem Anzeige- und Bedienterminal veranlassbar. Dadurch, dass das Anzeigen der ergänzenden maschinenspezifischen Informationen auf dem mobilen Endgerät durch eine Benutzereingabe auf dem Anzeige- und Bedienterminal veranlassbar ist, kann der Maschinenbediener sich bei den Bedienvorgängen auf das ihm bekannte Anzeige- und Bedienterminal konzentrieren. Zusätzliche Eingaben an dem mobilen Endgerät sind in diesem Zusammenhang nicht zwingend erforderlich.

Das erfindungsgemäße Verfahren wird ferner dadurch vorteilhaft weitergebildet, dass Steuerungsbefehle für die landwirtschaftliche Maschine von dem mobilen Endgerät an die landwirtschaftliche Maschine über das Bussystem gesendet werden. Vorzugsweise wird die landwirtschaftliche Maschine in Abhängigkeit der von dem mobilen Endgerät versendeten Steuerungsbefehle gesteuert. Das mobile Endgerät dient in diesem Fall als ergänzendes Bediengerät. Das Senden der Steuerungsbefehle für die landwirtschaftliche Maschine von dem mobilen Endgerät an die landwirtschaftliche Maschine erfolgt vorzugsweise über den Busadapter. Alternativ oder zusätzlich zu den Steuerungsbefehlen können auch von dem mobilen Endgerät erzeugte Daten, wie beispielsweise Positionsdaten, an die landwirtschaftliche Maschine übermittelt werden. Die Positionsdaten können beispielsweise GPS-Daten sein.

Es ist außerdem im erfindungsgemäßen Verfahren vorgesehen, dass an dem Anzeige- und Bedienterminal unterschiedliche Anzeigemasken einstellbar sind, wobei das Anzeigen der ergänzenden maschinenspezifischen Informationen durch das mobile Endgerät in Abhängigkeit der aktuell eingestellten Anzeigemaske an dem Anzeige- und Bedienterminal erfolgt. Somit können anzeigenmaskenspezifische Informationen durch das mobile Endgerät angezeigt werden. Die unterschiedlichen Anzeigemasken können über das Anzeige- und Bedienterminal und/oder über das mobile Endgerät konfigurierbar sein.

Die der Erfindung zugrundeliegende Aufgabe wird ferner durch ein Kommunikationssystem der eingangs genannten Art gelöst, wobei das erfindungsgemäße Kommunikationssystem ein mobiles Endgerät umfasst, welches mit dem Bussystem verbindbar und dazu eingerichtet ist, einen Anzeigebefehl, welcher das Anzeigen von ergänzenden maschinenspezifischen Informationen zu der landwirtschaftlichen Maschine betrifft, über das Bussystem zu empfangen und die ergänzenden maschinenspezifischen Informationen zu der landwirtschaftlichen Maschine anzuzeigen.

Die landwirtschaftliche Maschine kann beispielsweise eine Sämaschine, eine Feldspritze oder ein Düngerstreuer sein. Ferner kann die landwirtschaftliche Maschine eine Bodenbearbeitungsmaschine, wie etwa ein Pflug oder eine Egge, sein. Das mobile Endgerät kann beispielsweise ein Mobilfunkgerät, ein Smartphone oder ein Tablet sein.

In einer bevorzugten Ausführungsform ist das erfindungsgemäße Kommunikationssystem dazu eingerichtet, das Verfahren zum Unterstützen eines Maschinenbedieners bei dem Betrieb einer landwirtschaftlichen Maschine nach einer der vorstehend beschriebenen Ausführungsformen auszuführen. Hinsichtlich der Vorteile und Modifikationen des erfindungsgemäßen Kommunikationssystems wird somit auf die Vorteile und Modifikationen des erfindungsgemäßen Verfahrens verwiesen.

Nachfolgend werden bevorzugte Ausführungsformen der Erfindung unter Bezugnahme auf die beiliegenden Zeichnungen näher erläutert und beschrieben. Dabei zeigen:
- Fig. 1: ein Ausführungsbeispiel des erfindungsgemäßen Kommunikationssystems in einer schematischen Darstellung; und
- Fig. 2: ein weiteres Ausführungsbeispiel des erfindungsgemäßen Kommunikationssystems in einer schematischen Darstellung.

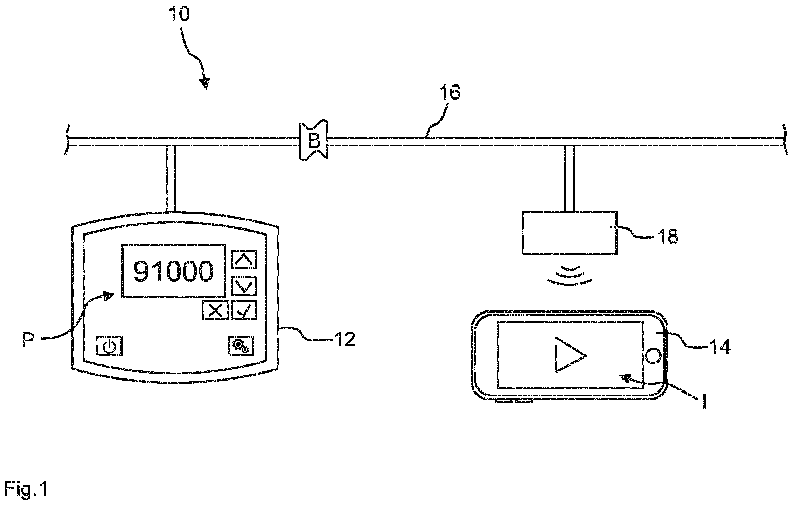

Die Fig. 1 zeigt ein Kommunikationssystem 10 mit einem Anzeige- und Bedienterminal 12, welches als ISOBUS-Terminal ausgebildet ist. Das Anzeige- und Bedienterminal 12 ist signalübertragend mit einem Bussystem 16 verbunden. Das Bussystem 16 ist ein ISOBUS-System. Das Bussystem 16 wird von einem landwirtschaftlichen Fahrzeug, beispielsweise einem Traktor, bereitgestellt. Eine nicht-dargestellte landwirtschaftliche Maschine ist ebenfalls signalübertragend mit dem Bussystem 16 verbunden. Die landwirtschaftliche Maschine kann beispielsweise eine Sämaschine, eine Feldspritze, ein Düngerstreuer oder eine Bodenbearbeitungsmaschine, wie etwa ein Pflug oder ein Grubber, sein, wobei die landwirtschaftliche Maschine von dem landwirtschaftlichen Fahrzeug getragen oder gezogen werden kann.

In das Bussystem 16 ist ein Busadapter 18 integriert, über welchen das Bussystem 16 drahtlos mit einem als Smartphone ausgebildeten mobilen Endgerät 14 verbunden ist. Die Datenübertragung zwischen dem Busadapter 18 und dem mobilen Endgerät 14 erfolgt über eine drahtlose Kommunikationsverbindung, wobei die drahtlose Kommunikationsverbindung eine Direktverbindung zwischen dem Busadapter 18 und dem mobilen Endgerät 14 ist. Vorliegend erfolgt die Kommunikation zwischen dem Busadapter 18 und dem mobilen Endgerät 14 über Bluetooth.

Durch das Anzeige- und Bedienterminal 16 können aktuelle Konfigurations- und Betriebsparameter P von der landwirtschaftlichen Maschine über das Bussystem 16 abgerufen werden. Die abgerufenen Konfigurations- und Betriebsparameter P können dann durch das Anzeige- und Bedienterminal angezeigt werden. Durch eine Benutzereingabe auf dem Anzeige- und Bedienterminal 12 kann ein Versenden eines Anzeigebefehls B an das mobile Endgerät 14 veranlasst werden. Das Anzeige- und Bedienterminal 12 stellt zum Veranlassen des Sendens des Anzeigebefehls B an das mobile Endgerät 14 eine Schaltfläche oder ein Bedienelement bereit. Die Schaltfläche oder das Bedienelement können beispielsweise mit einer Kennzeichnung, wie etwa einem Fragezeichen, versehen sein. Der Anzeigebefehl B betrifft das Anzeigen von ergänzenden maschinenspezifischen Informationen I zu der landwirtschaftlichen Maschine, wobei die ergänzenden maschinenspezifischen Informationen I vorliegend maschinenspezifische Einstell- und Konfigurationshinweise sind.

Nach dem Empfangen des Anzeigebefehls B durch das mobile Endgerät 14 werden die ergänzenden maschinenspezifischen Informationen I zu der landwirtschaftlichen Maschine durch das mobile Endgerät 14 angezeigt. Die ergänzenden maschinenspezifischen Informationen I werden vorliegend in Form einer Videosequenz wiedergegeben, wobei die Videosequenz ein Video-Tutorial ist. Alternativ können die ergänzenden maschinenspezifischen Informationen I auch als Audiosequenz wiedergegeben werden. Die ergänzenden maschinenspezifischen Informationen I können auch eine interaktive Bedienungsanleitung betreffen. Das Anzeigen der ergänzenden maschinenspezifischen Informationen I erfolgt über eine auf dem mobilen Endgerät 14 installierte Anwendung.

Über das Anzeigen der ergänzenden maschinenspezifischen Informationen I wird dem Maschinenbediener eine kontextbezogene Hilfe bereitgestellt, über welche der Betrieb der landwirtschaftlichen Maschine erheblich vereinfacht wird. Der Maschinenbediener benötigt folglich weniger umfangreiche Maschinenkenntnisse, um die landwirtschaftliche Maschine bedienen zu können. Darüber hinaus kann durch die Anzeige der ergänzenden maschinenspezifischen Informationen I eine erhebliche Komfortsteigerung bei der Maschinenbedienung erreicht werden. Außerdem wird der Einstell- und Konfigurationsvorgang an der landwirtschaftlichen Maschine erheblich vereinfacht, da der Maschinenbediener die Möglichkeit hat, das mobile Endgerät 14 beim Einstellen und Konfigurieren der landwirtschaftlichen Maschine mit sich zu führen.

Die von dem mobilen Endgerät 14 angezeigten ergänzenden maschinenspezifischen Informationen I können auf dem mobilen Endgerät 14 gespeichert sein oder durch das mobile Endgerät 14 von einer externen Datenbank abgerufen werden. Wenn die ergänzenden maschinenspezifischen Informationen I auf dem mobilen Endgerät 14 gespeichert sind, werden diese beispielsweise bei der Installation der Anwendung auf dem mobilen Endgerät auf einem Speicher des mobilen Endgeräts 14 hinterlegt. Wenn die ergänzenden maschinenspezifischen Informationen I durch das mobile Endgerät 14 von einer externen Datenbank abgerufen werden, erfolgt der Datenabruf von der externen Datenbank vorzugsweise über das Internet. Die externe Datenbank ist dabei kein Bestandteil des mobilen Endgeräts 14, der landwirtschaftlichen Maschine oder eines die landwirtschaftliche Maschine tragenden oder ziehenden Fahrzeugs. Beispielsweise wird die externe Datenbank von dem Hersteller der landwirtschaftlichen Maschine betrieben oder bereitgestellt.

An dem Anzeige- und Bedienterminal 12 sind unterschiedliche Anzeigemasken einstellbar. Die durch das mobile Endgerät 14 angezeigten ergänzenden maschinenspezifischen Informationen I sind abhängig von der aktuell eingestellten Anzeigemaske an dem Anzeige- und Bedienterminal 12. An dem mobilen Endgerät 14 werden somit anzeigemaskenspezifische Informationen wiedergegeben.

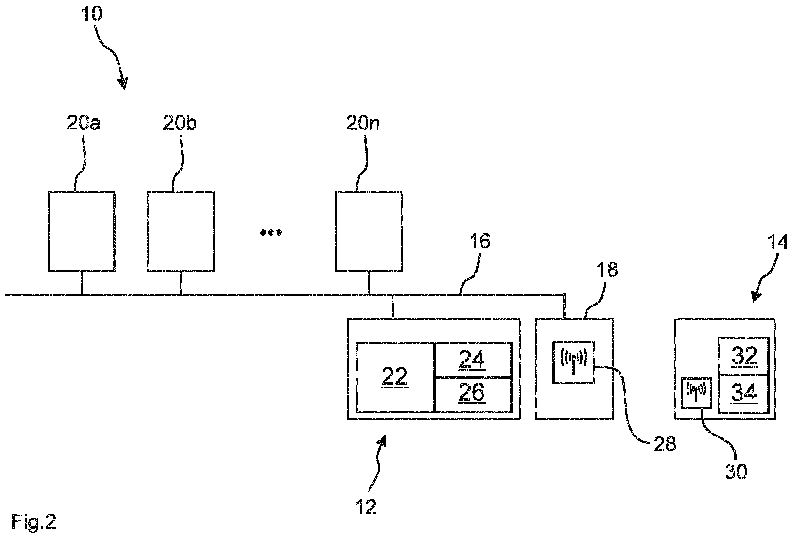

Die Fig. 2 zeigt ebenfalls ein Kommunikationssystem 10, bei welchem ein Anzeige- und Bedienterminal 12 mit einem Bussystem 16 verbunden ist. Ferner ist ein als Tabletcomputer ausgebildetes mobiles Endgerät 14 über einen Busadapter 18 mit dem Bussystem 16 verbunden. Der Busadapter 18 und das mobile Endgerät 14 weisen jeweils Kommunikationsmodule 28, 30 auf, über welche eine bidirektionale Datenübertragung zwischen dem Bussystem 16 und dem mobilen Endgerät 14 umsetzbar ist.

Das Anzeige- und Bedienterminal 12 weist eine Terminalsteuerung 22, eine Anzeigeeinrichtung 24 und mehrere Bedienelemente 26 auf. Die Anzeigeeinrichtung 24 und die Bedienelemente 26 können auch in einem Touchscreen zusammengefasst sein. Das mobile Endgerät 14 weist ebenfalls eine Anzeigeeinrichtung 32 und Bedienelemente 34 auf. Auch in diesem Fall können die Anzeigeeinrichtung 32 und die Bedienelemente 34 Bestandteile eines Touchscreens sein.

Das Bussystem 16 ist mit Maschinenelementen 20a, 20b, ... 20n der landwirtschaftlichen Maschine verbunden. Abhängig von dem Typ der landwirtschaftlichen Maschine können die Maschinenelemente 20a, 20b, ... 20n beispielsweise Säaggregate, Spritzdüsen oder Streuscheiben sein. Die Maschinenelemente 20a, 20b, ... 20n können Sensoren umfassen, wobei die Messwerte der Sensoren dem Anzeige- und Bedienterminal 12 über das Bussystem 16 zur Anzeige bereitgestellt werden können. Bei den Messwerten der Sensoren handelt es sich beispielsweise um aktuelle Konfigurations- und/oder Betriebsparameter P der landwirtschaftlichen Maschine. Diese Konfigurations- und/oder Betriebsparameter P können auch über den Busadapter 18 dem mobilen Endgerät 14 zur Anzeige bereitgestellt werden. Ferner stellt das mobile Endgerät 14 eine Eingabemöglichkeit für Steuerungsbefehle für die landwirtschaftliche Maschine bereit, welche über das Bussystem 16 an die landwirtschaftliche Maschine versendet werden können. Somit kann die landwirtschaftliche Maschine in Abhängigkeit der von dem mobilen Endgerät 14 versendeten Steuerungsbefehle gesteuert werden. Das mobile Endgerät 14 dient in diesem Fall also als ergänzendes Bediengerät, welches der Maschinenbediener zusätzlich zu dem Anzeige- und Bedienterminal nutzen kann. Zusätzlich zu den Steuerungsbefehlen können von dem mobilen Endgerät 14 auch ergänzende Daten, wie beispielsweise GPS-Daten, der landwirtschaftlichen Maschine bereitgestellt werden. Die ergänzenden Daten werden ebenfalls über den Busadapter 18 und das Bussystem 16 an die landwirtschaftliche Maschine übermittelt.

### Bezugszeichen

- 10: Kommunikationssystem
- 12: Anzeige- und Bedienterminal
- 14: mobiles Endgerät
- 16: Bussystem
- 18: Busadapter
- 20a, 20b, 20n: Maschinenelemente
- 22: Terminalsteuerung
- 24: Anzeigeeinrichtung
- 26: Bedienelemente
- 28: Kommunikationsmodul
- 30: Kommunikationsmodul
- 32: Anzeigeeinrichtung
- 34: Bedienelemente

- B: Anzeigebefehl
- I: maschinenspezifische Informationen
- P: Konfigurations- und Betriebsparameter

## Patentansprüche

1. Verfahren zum Unterstützen eines Maschinenbedieners bei dem Betrieb einer landwirtschaftlichen Maschine, mit den Schritten:
- Abrufen von aktuellen Konfigurations- und/oder Betriebsparametern (P) von der landwirtschaftlichen Maschine durch ein Anzeige- und Bedienterminal (12) über ein Bussystem (16), mit welchem das Anzeige- und Bedienterminal (12) und die landwirtschaftliche Maschine signalübertragend verbunden sind; und
- Anzeigen der abgerufenen Konfigurations- und/oder Betriebsparameter (P) durch das Anzeige- und Bedienterminal (12);
- Verbinden eines mobilen Endgeräts (14) mit dem Bussystem (16);
- Senden eines Anzeigebefehls (B), welcher das Anzeigen von ergänzenden maschinenspezifischen Informationen (I) zu der landwirtschaftlichen Maschine betrifft, an das mobile Endgerät (14) über das Bussystem (16);
**dadurch gekennzeichnet dass**
- über das Anzeigen der ergänzenden maschinenspezifischen Informationen (I) zu der landwirtschaftlichen Maschine durch das mobile Endgerät (14) eine kontextbezogene Hilfe bereitgestellt wird,
- die ergänzenden maschinenspezifischen Informationen maschinenspezifische Einstell- und/oder Konfigurationshinweise sind und in Form von Audiosequenzen, Videosequenzen, Bildern und/oder Texten wiedergegeben werden,
- an dem Anzeige- und Bedienterminal (12) unterschiedliche Anzeigemasken einstellbar sind, wobei das Anzeigen der ergänzenden maschinenspezifischen Informationen (I) durch das mobile Endgerät (14) in Abhängigkeit der aktuell eingestellten Anzeigemaske an dem Anzeige- und Bedienterminal (12) erfolgt,
- und das Senden des Anzeigebefehls (B) an das mobile Endgerät (14) und/oder das Anzeigen der ergänzenden maschinenspezifischen Informationen (I) zu der landwirtschaftlichen Maschine durch das mobile Endgerät (14) durch eine Benutzereingabe auf dem Anzeige- und Bedienterminal (12) veranlassbar ist.

2. Verfahren nach Anspruch 1,
**gekennzeichnet durch** zumindest einen der folgenden Schritte:
- Abrufen von aktuellen Konfigurations- und/oder Betriebsparametern (P) von der landwirtschaftlichen Maschine durch das mobile Endgerät (14) über das Bussystem (16),
- Anzeigen der abgerufenen Konfigurations- und/oder Betriebsparameter (P) durch das mobile Endgerät (14).

3. Verfahren nach Anspruch 1 oder 2,
**dadurch gekennzeichnet, dass** beim Verbinden des mobilen Endgeräts (14) mit dem Bussystem (16) eine drahtlose Kommunikationsverbindung zwischen dem mobilen Endgerät (14) und dem Bussystem (16) hergestellt wird.

4. Verfahren nach einem der vorstehenden Ansprüche,
**dadurch gekennzeichnet, dass** das Verbinden des mobilen Endgeräts (14) mit dem Bussystem (16) und/oder das Senden des Anzeigebefehls (B) an das mobile Endgerät (14) über einen Busadapter (18) erfolgt, welcher mit dem Bussystem (16) verbunden ist und über welchen Busnachrichten drahtlos an das mobile Endgerät (14) versendbar sind.

5. Verfahren nach einem der vorstehenden Ansprüche,
**dadurch gekennzeichnet, dass** die von dem mobilen Endgerät (14) angezeigten ergänzenden maschinenspezifischen Informationen (I) auf dem mobilen Endgerät (14) gespeichert oder durch das mobile Endgerät (14) von einer externen Datenbank abgerufen werden.

6. Verfahren nach einem der vorstehenden Ansprüche,
**gekennzeichnet durch** zumindest einen der folgenden Schritte:
- Senden von Steuerungsbefehlen für die landwirtschaftliche Maschine von dem mobilen Endgerät (14) an die landwirtschaftliche Maschine über das Bussystem (16);
- Steuern der landwirtschaftlichen Maschine in Abhängigkeit der von dem mobilen Endgerät (14) versendeten Steuerungsbefehle.

7. Kommunikationssystem (10), mit
- einer landwirtschaftlichen Maschine, welche signalübertragend mit einem Bussystem (16) verbunden ist;
- einem Anzeige- und Bedienterminal (12), welches signalübertragend mit dem Bussystem (16) verbunden und dazu eingerichtet ist, aktuelle Konfigurations- und/oder Betriebsparameter (P) von der landwirtschaftlichen Maschine über das Bussystem (16) abzurufen und die abgerufenen Konfigurations- und/oder Betriebsparameter (P) anzuzeigen;
- einem mobilen Endgerät (14), welches mit dem Bussystem (16) verbindbar und dazu eingerichtet ist, einen Anzeigebefehl (B), welcher das Anzeigen von ergänzenden maschinenspezifischen Informationen (I) zu der landwirtschaftlichen Maschine betrifft, über das das Bussystem (16) zu empfangen,
**dadurch gekennzeichnet, dass** es ferner eingerichtet ist,
- die ergänzenden maschinenspezifischen Informationen (I) zu der landwirtschaftlichen Maschine anzuzeigen und darüber eine kontextbezogene Hilfe bereitzustellen, wobei die die ergänzenden maschinenspezifischen Informationen maschinenspezifische Einstell- und/oder Konfigurationshinweise sind und in Form von Audiosequenzen, Videosequenzen, Bildern und/oder Texten wiedergegeben werden,
- an dem Anzeige- und Bedienterminal (12) unterschiedliche Anzeigemasken einstellbar sind, wobei das Anzeigen der ergänzenden maschinenspezifischen Informationen (I) durch das mobile Endgerät (14) in Abhängigkeit der aktuell eingestellten Anzeigemaske an dem Anzeige- und Bedienterminal (12) erfolgt,
- und das Senden des Anzeigebefehls (B) an das mobile Endgerät (14) und/oder das Anzeigen der ergänzenden maschinenspezifischen Informationen (I) zu der landwirtschaftlichen Maschine durch das mobile Endgerät (14) durch eine Benutzereingabe auf dem Anzeige- und Bedienterminal (12) veranlassbar ist.

8. Kommunikationssystem (10) nach Anspruch 7,
**dadurch gekennzeichnet, dass** das Kommunikationssystem (10) dazu eingerichtet ist, das Verfahren zum Unterstützen eines Maschinenbedieners bei dem Betrieb einer landwirtschaftlichen Maschine nach einem der Ansprüche 1 bis 6 auszuführen.

## Claims

1. Method for supporting a machine operator in operating an agricultural machine, comprising the steps of:
- retrieving current configuration and/or operating parameters (P) from the agricultural machine by means of a display and operating terminal (12) via a bus system (16) to which the display and operating terminal (12) and the agricultural machine are connected in a signal-transmitting manner; and
- displaying the retrieved configuration and/or operating parameters (P) by means of the display and operating terminal (12);
- connecting a mobile terminal (14) to the bus system (16);
- transmitting a display command (B) relating to displaying additional machine-specific information (I) regarding the agricultural machine to the mobile terminal (14) via the bus system (16); **characterized in that**
- context-related help is provided by displaying the additional machine-specific information (I) regarding the agricultural machine by means of the mobile terminal (14),
- the additional machine-specific information is machine-specific setting and/or configuration instructions and is reproduced in the form of audio sequences, video sequences, images and/or texts,
- different display masks can be set on the display and operating terminal (12), the additional machine-specific information (I) being displayed by means of the mobile terminal (14) depending on the currently set display mask on the display and operating terminal (12),
- and transmitting the display command (B) to the mobile terminal (14) and/or displaying the additional machine-specific information (I) regarding the agricultural machine by means of the mobile terminal (14) can be initiated by means of a user input on the display and operating terminal (12).

2. Method according to claim 1,
**characterized by** at least one of the following steps:
- retrieving current configuration and/or operating parameters (P) from the agricultural machine by means of the mobile terminal (14) via the bus system (16),
- displaying the retrieved configuration and/or operating parameters (P) by means of the mobile terminal (14).

3. Method according to claim 1 or 2,
**characterized in that,** when the mobile terminal (14) is connected to the bus system (16), a wireless communication connection is established between the mobile terminal (14) and the bus system (16).

4. Method according to any of the preceding claims,
**characterized in that** the mobile terminal (14) is connected to the bus system (16) and/or the display command (B) is transmitted to the mobile terminal (14) via a bus adapter (18) which is connected to the bus system (16) and via which bus messages can be wirelessly sent to the mobile terminal (14).

5. Method according to any of the preceding claims,
**characterized in that** the additional machine-specific information (I) displayed by the mobile terminal (14) is stored on the mobile terminal (14) or retrieved by means of the mobile terminal (14) from an external database.

6. Method according to any of the preceding claims,
**characterized by** at least one of the following steps:
- transmitting control commands for the agricultural machine from the mobile terminal (14) to the agricultural machine via the bus system (16);
- controlling the agricultural machine depending on the control commands sent by the mobile terminal (14).

7. Communication system (10), having
- an agricultural machine which is connected to a bus system (16) in a signal-transmitting manner;
- a display and operating terminal (12) which is connected to the bus system (16) in a signal-transmitting manner and is designed to retrieve current configuration and/or operating parameters (P) from the agricultural machine via the bus system (16) and to display the retrieved configuration and/or operating parameters (P);
- a mobile terminal (14) which can be connected to the bus system (16) and is designed to receive a display command (B) relating to displaying additional machine-specific information (I) regarding the agricultural machine via the bus system (16),
**characterized in that** it is further designed
- to display the additional machine-specific information (I) relating to the agricultural machine and to provide context-related help thereon, the additional machine-specific information being machine-specific setting and/or configuration instructions and being reproduced in the form of audio sequences, video sequences, images and/or texts,
- different display masks can be set on the display and operating terminal (12), the additional machine-specific information (I) being displayed by means of the mobile terminal (14) depending on the currently set display mask on the display and operating terminal (12),
- and transmitting the display command (B) to the mobile terminal (14) and/or displaying the additional machine-specific information (I) regarding the agricultural machine by means of the mobile terminal (14) can be initiated by means of a user input on the display and operating terminal (12).

8. Communication system (10) according to claim 7,
**characterized in that** the communication system (10) is designed to carry out the method for supporting a machine operator in operating an agricultural machine according to any of claims 1 to 6.

## Revendications

1. Procédé permettant l'assistance à un opérateur de machine lors du fonctionnement d'une machine agricole, comportant les étapes consistant à :
- récupérer des paramètres de configuration et/ou de fonctionnement (P) actuels de la machine agricole au moyen d'un terminal d'affichage et de manipulation (12) par l'intermédiaire d'un système de bus (16) au moyen duquel le terminal d'affichage et de manipulation (12) et la machine agricole sont connectés de manière à transmettre des signaux ; et
- afficher les paramètres de configuration et/ou de fonctionnement (P) récupérés au moyen du terminal d'affichage et de manipulation (12) ;
- connecter un dispositif terminal mobile (14) au système de bus (16) ;
- envoyer une instruction d'affichage (B), laquelle concerne l'affichage d'informations (I) complémentaires spécifiques à la machine concernant la machine agricole, au dispositif terminal mobile (14) par l'intermédiaire du système de bus (16) ; **caractérisé en ce que**
- une aide dépendant du contexte est fournie par l'intermédiaire de l'affichage des informations (I) complémentaires spécifiques à la machine concernant la machine agricole au moyen du dispositif terminal mobile (14),
- les informations complémentaires spécifiques à la machine sont des indications de réglage et/ou de configuration spécifiques à la machine et sont reproduites sous forme de séquences audio, séquences vidéo, images et/ou textes,
- différents masques d'affichage peuvent être réglés sur le terminal d'affichage et de manipulation (12), dans lequel l'affichage des informations (I) complémentaires spécifiques à la machine par le dispositif terminal mobile (14) est effectué en fonction du masque d'affichage actuellement réglé sur le terminal d'affichage et de manipulation (12),
- et l'envoi de l'instruction d'affichage (B) au dispositif terminal mobile (14) et/ou l'affichage des informations (I) complémentaires spécifiques à la machine concernant la machine agricole par le dispositif terminal mobile (14) peuvent être provoqués par une entrée utilisateur sur le terminal d'affichage et de manipulation (12).

2. Procédé selon la revendication 1,
**caractérisé par** au moins l'une des étapes suivantes :
- récupération de paramètres de configuration et/ou de fonctionnement (P) actuels de la machine agricole au moyen du dispositif terminal mobile (14) par l'intermédiaire du système de bus (16),
- affichage des paramètres de configuration et/ou de fonctionnement (P) récupérés au moyen du dispositif terminal mobile (14).

3. Procédé selon la revendication 1 ou 2,
**caractérisé en ce que,** lorsque le dispositif terminal mobile (14) est connecté au système de bus (16), une connexion de communication sans fil est établie entre le dispositif terminal mobile (14) et le système de bus (16).

4. Procédé selon l'une des revendications précédentes,
**caractérisé en ce que** la connexion du dispositif terminal mobile (14) au système de bus (16) et/ou l'envoi de l'instruction d'affichage (B) au dispositif terminal mobile (14) sont effectués par l'intermédiaire d'un adaptateur de bus (18) qui est connecté au système de bus (16) et par l'intermédiaire duquel des messages de bus peuvent être envoyés sans fil au dispositif terminal mobile (14).

5. Procédé selon l'une des revendications précédentes,
**caractérisé en ce que** les informations (I) complémentaires spécifiques à la machine affichées par le dispositif terminal mobile (14) sont enregistrées sur le dispositif terminal mobile (14) ou récupérées par le dispositif terminal mobile (14) à partir d'une base de données externe.

6. Procédé selon l'une des revendications précédentes,
**caractérisé par** au moins l'une des étapes suivantes :
- envoi d'instructions de commande pour la machine agricole depuis le dispositif terminal mobile (14) vers la machine agricole par l'intermédiaire du système de bus (16) ;
- commande de la machine agricole en fonction des instructions de commande envoyées par le dispositif terminal mobile (14).

7. Système de communication (10), comportant
- une machine agricole qui est connectée à un système de bus (16) de manière à transmettre des signaux ;
- un terminal d'affichage et de manipulation (12) qui est connecté au système de bus (16) de manière à transmettre des signaux et qui est configuré pour récupérer des paramètres de configuration et/ou de fonctionnement (P) actuels de la machine agricole par l'intermédiaire du système de bus (16) et pour afficher les paramètres de configuration et/ou de fonctionnement (P) récupérés ;
- un dispositif terminal mobile (14) qui peut être connecté au système de bus (16) et qui est configuré pour recevoir, par l'intermédiaire du système de bus (16), une instruction d'affichage (B) qui concerne l'affichage d'informations (I) complémentaires spécifiques à la machine concernant la machine agricole,
**caractérisé en ce qu'**il est en outre configuré pour
- afficher les informations (I) complémentaires spécifiques à la machine concernant la machine agricole et fournir, à partir de celles-ci, une aide dépendant du contexte, dans lequel les informations complémentaires spécifiques à la machine sont des indications de réglage et/ou de configuration spécifiques à la machine et sont reproduites sous forme de séquences audio, séquences vidéo, images et/ou textes,
- différents masques d'affichage peuvent être réglés sur le terminal d'affichage et de manipulation (12), dans lequel l'affichage des informations (I) complémentaires spécifiques à la machine par le dispositif terminal mobile (14) est effectué en fonction du masque d'affichage actuellement réglé sur le terminal d'affichage et de manipulation (12),
- et l'envoi de l'instruction d'affichage (B) au dispositif terminal mobile (14) et/ou l'affichage des informations (I) complémentaires spécifiques à la machine concernant la machine agricole par le dispositif terminal mobile (14) peuvent être provoqués par une entrée utilisateur sur le terminal d'affichage et de manipulation (12).

8. Système de communication (10) selon la revendication 7,
**caractérisé en ce que** le système de communication (10) est configuré pour mettre en oeuvre le procédé permettant l'assistance à un opérateur de machine lors du fonctionnement d'une machine agricole selon l'une des revendications 1 à 6.
